# EUROPÄISCHE PATENTSCHRIFT

(11) **EP 0 469 372 B1**
(45) Veröffentlichungstag und Bekanntmachung des Hinweises auf die Patenterteilung: **12.04.1995**
(21) Anmeldenummer: 91111801.6
(22) Anmeldetag: 16.07.1991
(51) Int. Cl.: C08F 20/12, C08F 2/20

(54) **Verfahren zur Herstellung von Suspensionspolymerisaten**
Process for preparing polymers in suspension
Procédé de préparation de polymères en suspension

(30) Priorität: 01.08.1990 DE 4024371
(43) Veröffentlichungstag der Anmeldung: 05.02.1992
(73) Patentinhaber: DEGUSSA AG, 60311 Frankfurt (DE)
(72) Erfinder: Hölle, Hans-Joachim, Dr., W-6458 Rodenbach (DE); Reinhard, Peter, W-8752 Kleinostheim (DE)

(56) Entgegenhaltungen:
- EP-A- 0 190 433
- US-A- 4 269 959

## Beschreibung

Die Erfindung betrifft ein Verfahren zur Herstellung von Suspensionspolymerisaten durch Polymerisation von Estern der Acrylsäure oder der Methacrylsäure oder von Vinylaromaten oder von Monomergemischen, die überwiegend aus solchen Monomeren bestehen, in wäßriger Suspension und in Gegenwart eines wasserlöslichen hochmolekularen organischen Dispergierhilfsmittels.

Solche Dispergierhilfsmittel sind beispielsweise Polyvinylalkohole bzw. teilweise verseifte Polyvinylacetate oder Celluloseether, wie Hydroxyethylcellulose oder Natriumcarboxymethylcellulose. Besonders geeignete Dispergierhilfsmittel sind Homopolymerisate der Acrylsäure oder der Methacrylsäure und insbesondere Mischpolymerisate, die sich zu wenigstens 50 Gewichtsprozent aus diesen Säuren herleiten.
Diese Polymerisate können in Form der freien Säuren oder als Alkalimetall- oder Ammoniumsalze eingesetzt werden. Sie haben den Vorteil, daß sie im allgemeinen leicht durch Auswaschen der gebildeten Polymerisatperlen entfernt werden können.

Diesem Vorteil steht aber als wesentlicher Nachteil gegenüber, daß bei Verwendung dieser Dispergierhilfsmittel neben dem gewünschten Suspensionspolymerisat auch größere Anteile an sehr feinteilige Emulsionspolymerisat entstehen (vgl. Makromolekulare Chemie 78 (1964), Seite 25).
Dieses Emulsionspolymerisat verbleibt bei der Aufarbeitung eines Polymerisationsansatzes größtenteils im Abwasser und führt infolgedessen zu einem entsprechenden Ausbeuteverlust. Da das Emulsionspolymerisat in der Regel im Molekulargewicht und bei Mischpolymerisaten auch in der Monomerzusammensetzung vom gewünschten Suspensionspolymerisat abweicht, kommt eine Rückgewinnung aus dem Abwasser zwecks Ausbeuteverbesserung meistens nicht infrage.

In der japanischen Offenlegungsschrift 2302/83 wird vorgeschlagen, die Bildung von Emulsionspolymerisat durch den Zusatz von wasserlöslichen Metallsalzen von mehrwertigen Carbonsäuren in einer Menge von 100 bis 20 000 ppm, bezogen auf die wäßrige Phase, zu verhindern. Eine experimentelle Überprüfung zeigte jedoch in vielen Fällen keinen oder allenfalls einen unbefriedigenden Effekt.

Aufgabe der vorliegenden Erfindung ist ein Suspensionspolymerisationsverfahren mit verminderter Bildung an Emulsionspolymerisat und ein Suspensionspolymerisat mit erhöhter Spritzgußzersetzungstemperatur bei geringerem Yellowness-Index.

Das erfindungsgemäße Verfahren ist nun dadurch gekennzeichnet, daß man die Polymerisation unter Zusatz mindestens einer mehrwertigen Phosphonsäure mit mindestens 2, vorzugsweise 2 bis 10, insbesondere 2 bis 5 Phosphonsäureresten im Molekül in Form der freien Säure oder ihres Alkalimetall- oder Ammoniumsalzes oder eines Alkalimetall- oder Ammoniumsalzes eines kondensierten anorganischen Phosphats der Formel M¹ₙ₊₂ PₙO₃ₙ₊₁, in der M¹ ein Alkalimetall- oder Ammoniumion und n eine Zahl von 3 bis 100 bedeuten, vornimmt.

Das so erhaltene Produkt gemäß Patentanspruch 7 bzw. Patentanspruch 8 weist eine Spritzgußzersetzungstemperatur von mindestens 300°C, bevorzugt 320°C und darüber und eine Verbesserung des Yellowness-Index um mindestens den Faktor 1,1, bevorzugt 1,2 und darüber, auf.

Der Zusatzstoff wird zweckmäßigerweise in einer Menge von 2 bis 5000 ppm, vorzugsweise von 5 bis 500 ppm, insbesondere von 10 bis 100 ppm, jeweils bezogen auf das im Polymerisationssystem vorhandene Wasser, angewandt.

Typische Beispiele für die erfindungsgemäß zu verwendenden mehrwertigen Phosphonsäuren sind die folgenden, z.B. als Handelsprodukte der Firma Protex (Levallois/Frankreich) erhältlichen Verbindungen:
1-Hydroxyethan-1,1-diphosphonsäure (HEDP), Nitrilotrimethylenphosphonsäure (NTPO), Ethylendiamintetramethylenphosphonsäure (EDTPO), Hexamethylendiamintetramethylenphosphonsäure (HDTPO), Diethylentriaminpentamethylenphosphonsäure (DTPPO).

Bevorzugt sind bei den Phospaten die Polyphosphate mit 10 bis 50 Einheiten, insbesondere die Na oder K-Salze.
Typisches Beispiel eines erfindungsgemäß zu verwendenden anorganischen Phosphats ist das handelsübliche sogenannte Graham'sche Salz mit einem mittleren Kondensationsgrad n von etwa 20.

Bevorzugt werden die mehrwertigen Phosphonsäuren bzw. ihre Alkalimetall- oder Ammoniumsalze verwendet, da diese gegenüber den anorganischen Polyphosphaten zum einen eine wesentlich geringere Hydrolyseneigung aufweisen und zum anderen auch in Gegenwart von mehrwertigen Kationen, wie Mg²⁺ - oder Al³⁺ - Ionen wirksam die Bildung von Emulsionspolymerisat zurückdrängen. Salze solcher mehrwertigen Ionen werden dem Polymerisationssystem häufig zugesetzt, um die Stabilität der Dispersion zu verbessern oder Eigenschaften des Endproduktes in bestimmter Weise zu beeinflussen.

Die erfindungsgemäß zu verwendenden Zusatzstoffe werden üblicherweise der Wasserphase zugesetzt, besonders einfach ist eine Zugabe zum Dispergiermittel, falls dieses in Form einer wässrigen Lösung bevorratet wird. Bei ausreichender Monomerlöslichkeit können sie jedoch auch der Monomerphase zugesetzt werden. Obwohl ihr Zusatz nur in geringer Menge erforderlich ist, bewirken sie dennoch eine starke Verminderung des Anteils an Emulsionspolymerisat. Negative Einflüsse auf den Ablauf der Polymerisation sowie auf die Produkteigenschaften treten nicht auf. Im Gegenteil wird in vielen Fällen eine Erhöhung der Stabilität der Dispersion sowie eine Verbesserung der Produkteigenschaften der Suspensionspolymerisate (z.B. Farbe, thermische Beständigkeit) erreicht.
Besonders vorteilhaft für den technischen Prozeß ist, daß die Zusatzstoffe in ihrer Wirksamkeit im allgemein kein ausgeprägtes Konzentrationsoptimum aufweisen, sondern über einen relativ breiten Konzentrationsbereich gleichermaßen wirksam sind.

Das erfindungsgemäße Verfahren eignet sich grundsätzlich für die Polymerisation aller Monomeren und Monomergemische aus der Gruppe der (Meth)acrylsäureester und/oder Vinylaromaten, die üblicherweise in Suspension polymerisiert werden.
Zweckmäßigerweise sollten die Monomeren so ausgewählt werden, daß das gebildete Polymerisat eine Glasübergangstemperatur von mindestens 30°C aufweist, damit ein Verkleben der gebildeten Polymerisatperlen vermieden wird.

Geeignete Monomere sind vor allem die Ester der Acrylsäure und Methacrylsäure mit einwertigen Alkoholen, insbesondere solchen mit 1 bis 16 Kohlenstoffatomen, wie Methacrylsäuremethylester, Methacrylsäureethylester, Methacrylsäure-n-butylester, Methacrylsäureisobutylester, Methacrylsäure-2-ethylhexylester, Methacrylsäurelaurylester, Methacrylsäurestearylester, Acrylsäuremethylester, Acrylsäureethylester, Acrylsäure-n-butylester, Acrylsäure-tert.butylester, Acrylsäure-2-ethylhexylester oder Acrylsäurelaurylester, und Vinylaromaten, wie Styrol, Vinyltoluol, p-tert.Butylstyrol oder α-Methylstyrol.

Als Bestandteile von Monomergemischen eignen sich auch Monomere mit einer weiteren funktionellen Gruppe, wie α,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethylacrylat, Hydroxyethylmethacrylat, Hydroxypropylacrylat oder Hydroxypropylmethacrylat; Acrylamid oder Methacrylamid; Dimethylaminoethylacrylat oder Dimethylaminoethylmethacrylat. Der Anteil dieser Monomeren am jeweiligen Gemisch sollte wegen ihrer Wasserlöslichkeit zweckmäßigerweise auf maximal etwa 10 Gewichtsprozent begrenzt werden. Weitere geeignete Bestandteile von Monomergemischen sind beispielsweise Glycidylacrylat oder Glycidylmethacrylat.

Als Dispergierhilfsmittel dienen bevorzugt Homopolymerisate der Acrylsäure oder der Methacrylsäure oder Mischpolymerisate, die sich zu wenigstens 50 Gewichtsprozent aus diesen Säuren herleiten und daneben noch bis zu 50 Gewichtsprozent an Bausteinen enthalten, die von mit Acrylsäure oder Methacrylsäure copolymerisierbaren Monomeren, insbesondere Methacrylsäuremethylester, stammen.

Besonders bevorzugt werden diese Polymerisate in Form ihrer Alkalimetall- oder Ammoniumsalze verwendet.
Besonders geeignete Dispergierhilfsmittel sind solche Polymerisate, die als Alkalimetall- oder Ammoniumsalze in einer 6 gewichtsprozentigen wäßrigen Lösung eine bei Raumtemperatur gemessene dynamische Viskosität zwischen 200 und 10 000 mPa·s aufweisen. Diese Dispergiermittel werden zweckmäßigerweise in einer Menge von 0,05 bis 1 Gewichtsprozent, insbesondere von 0,1 bis 0,4 Gewichtsprozent, bezogen auf das im Polymerisationssystem vorhandene Wasser, angewandt.
Sie werden vorteilhafterweise als 3 bis 20 gewichtsprozentige wäßrige Lösungen vorrätig gehalten und in dieser Form der Wasserphase bzw. dem Polymerisationsansatz zugesetzt.

Daneben können auch Polyvinylalkohole bzw. teilweise verseifte Polyvinylacetate sowie Celluloseether, wie Hydroxyethylcellulose oder Natriumcarboxymethylcellulose, als Dispergierhilfsmittel verwendet werden.

Die Wasserphase kann außer dem Dispergierhilfsmittel natürlich auch noch weitere bei Suspensionspolymerisationen üblicherweise eingesetzte Zusätze enthalten, beispielsweise Puffersalze, wie Dinatriumhydrogenphosphat oder Natriumdihydrogenphosphat oder andere Salze bzw. Additive zur Erzielung besonderer Effekte hinsichtlich Polymerisationsverlauf oder Produkteigenschaften, z.B. Magnesiumsulfat.

Als Polymerisationsinitiatoren, die in der Regel der Monomerphase zugesetzt werden, dienen die üblicherweise verwendeten radikalischen Initiatoren, insbesondere Peroxide und Azoverbindungen mit Zerfallstemperaturen unterhalb von 120°C. Unter Umständen kann es vorteilhaft sein, ein Gemisch verschiedener Initiatoren einzusetzen. Die Einsatzmenge liegt im allgemeinen im Bereich zwischen 0.1 und 5 Gewichtsprozent, bezogen auf die Monomerphase. Geeignete Initiatoren sind beispielsweise Dioctanoylperoxid, Didecanoylperoxid, Dilauroylperoxid, Dibenzoylperoxid, Bis-(4-chlorbenzoyl)-peroxid, Bis-(2,4-dichlorbenzoyl)-peroxid, Bis-(2-methylbenzoyl)-peroxid, tert.Butylperpivalat, tert.Butylperoctoat, tert.Butylperbenzoat, Azobisisobuttersäurenitril oder Azobis-(2,4-dimethyl)-valeronitril.

Zur Einstellung des Molekulargewichts des gebildeten Polymerisats können der Monomerphase auch in üblicher Weise bis zu 8 Gewichtsprozent eines oder mehrerer an sich bekannter Kettenregler zugesetzt werden.
Beispielsweise seien genannt: Mercaptane, wie n-Butylmercaptan, n-Octylmercaptan, n-Dodecylmercaptan oder tert.Dodecylmercaptan; Thioglykolsäureester, wie Thioglykolsäureisooctylester oder Thioglykolsäurelaurylester; Thioglykolsäure; aliphatische Chlorverbindungen; Enoläther oder dimeres α-Methylstyrol.

Die Monomerphase kann außer den Initiatoren und Kettenreglern noch weitere üblicherweise eingesetzte Zusätze enthalten, z.B. Gleitmittel (Stearinsäure, Cetylalkohol) oder Stabilisatoren (UV-Stabilisatoren).

Falls vernetzte Polymerisate hergestellt werden sollen, kann die Monomerphase auch bis zu etwa 10 Gewichtsprozent mehrfunktionelle Monomere enthalten, beispielsweise Ethylenglykoldi(meth)acrylat, Butandioldi(meth)acrylat oder Divinylbenzol.

Das erfindungsgemäße Verfahren kann prinzipiell in der bei der Suspensionspolymerisation üblichen Weise durchgeführt werden. Bei einer diskontinuierlichen Ausführungsform wird beispielsweise die Wasserphase, welche das Dispergierhilfsmittel, den oder die erfindungsgemäß zu verwendenden Zusatzstoffe und gegebenenfalls sonstige an sich übliche Zusätze bereits enthält, in einem geeigneten Polymerisationsgefäß vorgelegt, und es wird die Monomerphase, die in der Regel bereits die monomerlöslichen Zusatzstoffe, wie Initiatoren, Kettenregler oder Gleitmittel gelöst enthält, unter Rühren zugegeben. Der im Polymerisationssystem enthaltene Luftsauerstoff wird zweckmäßigerweise durch Evakuieren und Beaufschlagung mit Stickstoff entfernt.
Die Polymerisation wird durch Aufheizen des Ansatzes in Gang gebracht.

Das Monomer/Wasser-Verhältnis liegt in der Regel zwischen 1 : 4 und 1 : 0,8. Die Polymerisationstemperatur liegt üblicherweise zwischen etwa 60 und etwa 120°C. Je nach dem angewandten Monomer/Wasser-Verhältnis erfolgt die Polymerisation adiabatisch oder unter zumindest teilweiser Abführung der Polymerisationswärme durch Kühlung.

Nach beendeter Polymerisation wird der Ansatz abgekühlt und die gebildeten Polymerisatperlen werden durch Filtration oder Zentrifugation abgetrennt.
Zweckmäßigerweise werden sie gleich auf dem Filter oder in der Zentrifuge mit Wasser ausgewaschen.
Anschließend werden sie in einem geeigneten Trockner, beispielsweise in einem Trockenofen oder in einem Wirbelschichttrockner, getrocknet.

Die Erfindung wird durch die nachfolgenden Beispiele und Vergleichsversuche näher erläutert. Alle Prozentangaben bedeuten Gewichtsprozente.

Zur Bestimmung des Anteils an Emulsionspolymerisat werden die Ansätze nach beendeter Polymerisation über eine 60 »m Nylon-Gaze abgenutscht. Ca. 80 bis 100 g des unverdünnten Filtrats ("Mutterlauge") werden während 16 Stunden bei 100°C und danach während 4 Stunden bei 125°C im Umlufttrockenschrank getrocknet.
Die in den Beispielen angegebenen Ausbeuteverluste durch Emulsionspolymerisat errechnen sich bei gegebenem Monomer/Wasser-Verhältnis aus dem so bestimmten Feststoffgehalt der Mutterlaugen unter Berücksichtigung der der Wasserphase zugesetzten Feststoffe (Dispergiermittel etc.).

### Beispiel 1:

In einem 5 1-Polymerisationsgefäß, ausgestattet mit Rührer, Rückflußkühler und Thermometer, wurde ein Gemisch aus 2 800 g vollentsalztem Wasser, 80 g einer 6 %igen wäßrigen Lösung eines Mischpolymerisats aus 80 % Methacrylsäure und 20 % Methylmethacrylat in Form des Natriumsalzes mit einer dynamischen Viskosität von 1 800 mPa.s und 144 mg des Na-Salzes der Ethylendiamintetramethylenphosphonsäure (50 ppm auf Wasserphase) vorgelegt und auf 50°C erwärmt. Unter Rühren wurden nun 1 920 g eines Gemisches aus 94 Gewichtsteilen Methylmethacrylat, 6 Gewichtsteilen Ethylacrylat, 0,25 Gewichtsteilen n-Dodecylmercaptan und 0,4 Gewichtsteilen Dilauroylperoxid zugegeben.

Der Ansatz wurde evakuiert und nach Druckausgleich mit Stickstoff drei Stunden lang in einem Wasserbad von 80°C gerührt und dann auf 30°C abgekühlt. Die Polymerisatperlen wurden bei dieser Temperatur über eine 60 »m Nylon-Gaze abenutscht, mit vollentsalztem Wasser ausgewaschen und in einem Umlufttrockenschrank getrocknet.

Es wurden klare Polymerisatperlen mit einem mittleren Korndurchmesser d von 0.30 mm (50 % Siebrückstand) erhalten. Die Mutterlauge enthielt 0,5 % eines feinstteiligen Polymeren mit einer mittleren Teilchengröße von 0.25 »m. Hieraus errechnet sich ein Ausbeuteverlust durch dieses "Emulsionspolymerisat" von 0,75 %. Der Yellowness-Index, nach ASTM D 1925 gemessen an 3 mm starken, spritzgegossenen Plättchen, betrug 0,77. Das Produkt ließ sich nach der Granulation in einem Spritzgießtest bis zu einer Temperatur von 320°C ohne Zersetzungsblasen verarbeiten.

### Beispiel 2

Das Beispiel 1 wurde wiederholt mit dem einzigen Unterschied, daß nur 10 ppm des Natriumsalzes der Ethylendiamintetramethylenphosphonsäure der Wasserphase zugesetzt wurden. Es wurden klare Polymerisatperlen mit einem mittleren Korndurchmesser d von 0,28 mm erhalten. Der Ausbeuteverlust durch Emulsionspolymerisat betrug 0,8 %.

### Beispiel 3

Das Beispiel 1 wurde wiederholt mit dem einzigen Unterschied, daß 1 000 ppm des Natriumsalzes der Ethylendiamintetramethylenphosphonsäure der Wasserphase zugesetzt wurden. Es wurden klare Polymerisatperlen mit einem mittleren Korndurchmeser d von 0,4 mm erhalten. Der Ausbeuteverlust durch Emulsionspolymerisat betrug ebenfalls 0,8 %.

### Beispiel 4

Das Beispiel 1 wurde wiederholt mit dem einzigen Unterschied, daß anstelle des Natriumsalzes der Ethylendiamintetramethylenphosphonsäure der Wasserphase 50 ppm Nitrilotrimethylenphosphonsäure zugesetzt wurden.
Es wurden klare Polymerisatperlen mit einem mittleren Korndurchmesser d von 0,35 mm erhalten.
Der Ausbeuteverlust durch Emulsionspolymerisat betrug 0,9 %.

### Beispiel 5

Das Beispiel 1 wurde wiederholt mit dem einzigen Unterschied, daß anstelle eines Zusatzes des Natriumsalzes der Ethylendiamintetramethylenphosphonsäure zur Wasserphase der Monomerphase 50 ppm 1-Hydroxyethan-1,1-diphosphonsäure zugesetzt wurden.

Es wurden klare Polymerisatperlen mit einem mittleren Korndurchmesser d von 0,4 mm erhalten.
Der Ausbeuteverlust durch Emulsionspolymerisat betrug 0,9 %.

### Beispiel 6

Das Beispiel 1 wurde wiederholt, mit dem einzigen Unterschied, daß anstelle des Natriumsalzes der Ethylendiamintetramethylenphosphonsäure der Wasserphase 50 ppm Graham'sches Salz zugesetzt wurden.

Es wurden klare Polymerisatperlen mit einem mittleren Korndurchmesser d von 0,35 mm erhalten.
Der Ausbeuteverlust durch Emulsionspolymerisat betrug 1,2 %.

### Vergleichsversuch 1 A

Das Beispiel 1 wurde wiederholt mit dem einzigen Unterschied, daß weder ein polymeres anorganisches Phosphat noch eine mehrwertige Phosphonsäure als freie Säure oder Alkalimetall- bezw. Ammoniumsalz zugesetzt wurde.
Es wurden Polymerisatperlen mit einem mittleren Korndurchmesser d von 0,28 mm erhalten.
Die Mutterlauge enthielt 2,4 % eines sehr feinteiligen Polymeren (Teilchengröße 0,02 bis 0,2 »m).
Dies entspricht einem Ausbeuteverlust durch dieses "Emulsionspolymerisat" von ca. 3,6 %.

Der Yellowness-Index nach ASTM D 1925 an 3 mm starken, spritzgegossenen Plättchen betrug 0,93 (um den Faktor 0,93 : 0.77 ∼ 1,21 schlechter als Beispiel 1); das entsprechende Granulat wies bei einem Spritzgießtest bei einer Temperatur von 320°C Zersetzungsblasen auf.

### Vergleichsversuch 1 B Das Beispiel 1 wurde wiederholt mit dem einzigen Unterschied daß entsprechend der Lehre der JP-OS 2302/83 vor Zugabe des Monomergemisches der Wasserphase 2,88 g (1 000 ppm) Natriumcitrat zugesetzt wurden. Der Ausbeuteverlust durch "Emulsionspolymerisat" in der Mutterlauge betrug bei diesem Versuch 2,2 %.

### Beispiel 7

In einem 5 1-Polymerisationsgefäß, ausgestattet mit Rührer, Rückflußkühler und Thermometer, wurde ein Gemisch aus 2 800 g vollentsalztem Wasser, 80 g einer 6 %igen wässrigen Lösung eines Mischpolymerisats aus 70 % Methacrylsäure und 30 % Methylmethacrylat in Form des Ammoniumsalzes mit einer dynamischen Viskosität von 1 500 mPa.s und 144 mg des Na-Salzes der Ethylendiamintetramethylenphosphonsäure (50 ppm auf Wasserphase) vorgelegt und auf 50°C erwärmt. Unter Rühren wurden nun 1 920 g eines Gemisches aus 66 Gewichtsteilen Styrol, 34 Gewichtsteilen n-Butylmethacrylat, 0,6 Gewichtsteilen dimerem α-Methylstyrol, 1,2 Gewichtsteilen Dibenzoylperoxid (als 75 %iges wasserhaltiges Pulver) und 0,3 Gewichtsteilen tert.Butylperbenzoat zugegeben.
Der Ansatz wurde evakuiert, nach Druckausgleich mit Stickstoff während 4 Stunden in einem Wasserbad von 90°C gerührt und dann auf 30°C abgekühlt. Die Polymerisatperlen wurden bei dieser Temperatur über eine 60 »m Nylon-Gaze abgenutscht, mit vollentsalztem Wasser ausgewaschen und in einem Wirbelschichttrockner bei 60°C getrocknet. Es wurden klare Polymerisatperlen mit einem mittleren Korndurchmesser von 0,8 mm erhalten.

Der "Emulsionspolymerisat"-Anteil der Mutterlauge betrug 1,1 %; dies entspricht einem Ausbeuteverlust von 1,4 %.

### Vergleichsversuch 2

Das Beispiel 7 wurde wiederholt mit dem einzigen Unterschied, daß auf den Zusatz des Na-Salzes der Ethylendiamintetramethylenphosphonsäure verzichtet wurde.

Es wurden klare Polymerisatperlen mit einem mittleren Korndurchmesser von 0,7 mm erhalten.
Der "Emulsionspolymerisat"-Anteil der Mutterlauge betrug 2,2 %; dies entspricht einem Ausbeuteverlust von 2,8 %.

### Beispiel 8

In einem 5 1-Polymerisationsgefäß, ausgestattet mit Rührer, Rückflußkühler und Thermometer wurden 2 880 g vollentsalztes Wasser, in dem 6,6 g eines teilverseiften Polyvinylacetats mit einer Esterzahl von 140 mg KOH/g und einem mittleren Molekulargewicht von 127 000 g/Mol - erhältlich z.B. unter der Handelsbezeichnung Mowiol® 40/88 - gelöst waren, zusammen mit 144 mg des Natriumsalzes der Ethylendiamintetramethylenphosphonsäure vorgelegt und auf 60°C erwärmt. Unter Rühren wurden nun 1 920 g eines Gemisches aus 98 Gewichtsteilen Methylmethacrylat, 2 Gewichtsteilen n-Butylacrylat, 0,2 Gewichtsteilen n-Dodecylmercaptan und 0,5 Gewichtsteilen Dilauroylperoxid zugegeben. Der Ansatz wurde evakuiert und nach Druckausgleich mit Stickstoff 3 Stunden lang in einem Wasserbad von 80°C gerührt und dann auf 30°C abgekühlt. Die Polymerisatperlen wurden bei dieser Temperatur über eine 60 »m Nylon-Gaze abgenutscht, mit vollentsalztem Wasser ausgewaschen und bei 60°C in einem Wirbelschicht-Trockner getrocknet.

Es wurden klare Polymerisatperlen mit einem mittleren Korndurchmesser d von 0,28 mm erhalten.
Der "Emulsionspolymerisat"-Anteil der Mutterlauge betrug 1,25 %; dies entspricht einem Ausbeuteverlust von 1,85 %.

### Vergleichsversuch 3

Das Beispiel 8 wurde wiederholt, jedoch ohne Zusatz des Natriumsalzes der Ethylendiamintetramethylenphosphonsäure.

Es wurden ebenfalls klare Polymerisatperlen mit einem mittleren Korndurchmesser d von 0,28 mm erhalten.
Der "Emulsionspolymerisat"-Anteil der Mutterlauge betrug jedoch 2, 6 %; dies entspricht einem Ausbeuteverlust von 3,9 %.

### Beispiel 9

In einem 5 1-Polymerisationsgefäß, ausgestattet mit Rührer, Rückflußkühler und Thermometer wurde ein Gemisch aus 2 820 g vollentsalztem Wasser, 60 g einer 6 %igen wässrigen Lösung eines Mischpolymerisats aus 60 % Methacrylsäure und 40 % Methylmethacrylat in Form des Kaliumsalzes mit einer dynamischen Viskosität von 1 400 mPa.s, 0,5 g Natriumsulfat, 1 g Magnesiumsulfat und 144 mg des Kaliumsalzes der Ethylendiamintetramethylenphosphonsäure vorgelegt und auf 40°C erwärmt.
Unter Rühren wurden nun 1 920 g eines Gemisches aus 20 Gewichtsteilen Methylmethacrylat, 80 Gewichtsteilen n-Butylmethacrylat, 0,3 Gewichtsteilen n-Dodecylmercaptan und 0,5 Gewichtsteilen Dilauroylperoxid zugegeben. Der Ansatz wurde evakuiert und nach Druckausgleich mit Stickstoff 3,5 Stunden lang in einem Wasserbad von 75°C gerührt und dann auf 30°C abgekühlt. Die Polymerisatperlen wurden bei dieser Temperatur über eine 60 »m Nylon-Gaze abgenutscht, mit vollentsalztem Wasser gewaschen und bei 40°C in einem Wirbelschichttrockner getrocknet.

Es wurden klare Polymerisatperlen mit einem mittleren Teilchendurchmesser d von 0,25 mm erhalten.
Der "Emulsionspolymerisat"-Anteil der Mutterlauge betrug 0,25 %; dies entspricht einem Ausbeuteverlust von 0,4 %.

### Vergleichsversuch 4 A

Das Beispiel 9 wurde wiederholt, jedoch ohne Zusatz des Natriumsalzes der Ethylendiamintetramethylenphosphonsäure.

Es wurden ebenfalls klare Polymerisatperlen mit einem mittleren Korndurchmesser d von 0,25 mm erhalten.
Der "Emulsionspolymerisat"-Anteil der Mutterlauge betrug 1,6 %; dies entspricht einem Ausbeuteverlust von 2,4 %.

### Vergleichsversuch 4 B

Das Beispiel 9 wurde wiederholt mit dem einzigen Unterschied, daß der Wasserphase entsprechend der Lehre der JP-OS 2302/83 288 mg (100 ppm) des Natriumsalzes der Ethylendiamintetraessigsäure anstelle des Natriumsalzes der Ethylendiamintetramethylenphosphonsäure zugesetzt wurden.
Der "Emulsionspolymerisat"-Anteil der Mutterlauge betrug 1,4 %; dies entspricht einem Ausbeuteverlust von 2,1 %.

### Beispiel 10

In einem 5 1-Polymerisationsgefäß, ausgestattet mit Rührer, Rückflußkühler und Thermometer, wurde ein Gemisch aus 2310 g vollentsalztem Wasser, 576 g einer 1 %igen wäßrigen Lösung einer hydrophob modifizierten Hydroxyethylcellulose mit einem molaren Substitutionsgrad von 3,3 und einer Lösungsviskosität (1 %ige wäßrige Lösung) von ca. 300 mPa.s - erhältlich z.B. unter der Handelsbezeichnung Natrosol® Plus Grade 330 (Aqualon Company) - und 144 mg des Na-Salzes der Ethylendiamintetramethylenphosphonsäure vorgelegt und auf 50°C erwärmt. Unter Rühren wurden nun 1 920 g eines Gemisches aus 99 Gewichtsteilen Methylmethacrylat, 1 Gewichtsteil n-Butylacrylat, 0,4 Gewichtsteilen n-Dodecylmercaptan und 0,25 Gewichtsteilen Dilauroylperoxid zugegeben. Der Ansatz wurde evakuiert und nach Druckausgleich mit Stickstoff 3,5 Stunden lang in einem Wasserbad von 75°C gerührt und dann auf 30°C abgekühlt. Die Polymerisatperlen wurden bei dieser Temperatur über eine 60 »m Nylon-Gaze abgenutscht, mit vollentsalztem Wasser gewaschen und bei 40°C in einem Wirbelschicht-Trockner getrocknet.

Es wurden klare Polymerisatperlen mit einem mittleren Teilchendurchmesser d von 0,35 mm erhalten.
Der "Emulsionspolymerisat"-Anteil der Mutterlauge lag bei 1,4 %; dies entspricht einem Ausbeuteverlust von ca. 2,1 %.

### Vergleichsversuch 5

Das Beispiel 10 wurde wiederholt, jedoch ohne Zusatz des Na-Salzes der Ethylendiamintetramethylphosphonsäure.

Es wurden klare Polymerisatperlen mit einem mittleren Teilchendurchmesser d von 0,3 mm erhalten.
Der "Emulsionspolymerisat"-Anteil der Mutterlauge betrug 3,8 %; dies entspricht einem Ausbeuteverlust von 5,5 %.

## Patentansprüche

1. Verfahren zur Herstellung von Suspensionspolymerisaten durch Polymerisation von Estern der Acrylsäure oder der Methacrylsäure oder von Vinylaromaten oder von Monomergemischen, die überwiegend aus solchen Monomeren bestehen, in wäßriger Suspension und in Gegenwart eines wasserlöslichen hochmolekularen organischen Dispergierhilfsmittels, dadurch gekennzeichnet, daß man die Polymerisation unter Zusatz mindestens einer mehrwertigen Phosphonsäure mit mindestens 2 Phosphonsäureresten im Molekül in Form der freien Säure oder ihres Alkalimetall- oder Ammoniumsalzes oder eines Alkalimetall- oder Ammoniumsalzes eines kondensierten anorganischen Phosphats der Formel M¹ₙ₊₂ PₙO₃ₙ₊₁, in der M¹ ein Alkalimetall- oder Ammoniumion und n eine Zahl von 3 bis 100 bedeuten, vornimmt.

2. Verfahren nach Anspruch 1, dadurch gekennzeichnet, daß man den Zusatzstoff in einer Menge von 2 bis 5000 ppm, bezogen auf das im Polymerisationssystem vorhandene Wasser, anwendet.

3. Verfahren nach Anspruch 2, dadurch gekennzeichnet, daß man den Zusatzstoff in einer Menge von 5 bis 500 ppm, bezogen auf das im Polymerisationssystem vorhandene Wasser, anwendet.

4. Verfahren nach Anspruch 3, dadurch gekennzeichnet, daß man den Zusatzstoff in einer Menge von 10 bis 100 ppm, bezogen auf das im Polymerisationssystem vorhandene Wasser, anwendet.

5. Verfahren nach einem der vorhergehenden Ansprüche, dadurch gekennzeichnet, daß die Phosphonsäure mit 2 bis 10 Phosphonsäureresten im Molekül vorliegt.

6. Verfahren nach Anspruch 5, dadurch gekennzeichnet, daß die Phosphonsäure mit 2 bis 5 Phosphonsäureresten im Molekül vorliegt.

7. Methacrylsäuremethylestersuspensionspolymerisat, enthaltend 80 - 100 Gew % Methacrylsäuremethylester und 0 - 20 Gew.% mindestens einer der Komponenten aus der Gruppe Methylacrylat, Ethylacrylat, Butylacrylat, Methacrylsäureethylester, Methacrylsäurebutylester, Methacrylsäure-2-ethylhexylester, 2-Ethylhexylacrylat, erhalten durch Polymerisation der Monomeren oder des Monomergemisches in wäßriger Suspension und in Gegenwart eines wasserlöslichen hochmolekularen organischen Dispergierhilfsmittel, wobei man zur Erhöhung der Spritzgußzersetzungstemperatur auf mindestens 300° und zur Verbesserung des Yellowness-Index nach ASTM D 1925 um mindestens den Faktor 1,1 die Polymerisation unter Zusatz mindestens einer mehrwertigen Phosphonsäure mit mindestens 2 Phosphonsäureresten im Molekül in Form der freien Säure oder ihres Alkalimetall- oder Ammoniumsalzes oder eines Alkalimetall- oder Ammoniumsalzes eines kondensierten anorganischen Phosphats der Formel M¹ₙ₊₂ PₙO₃ₙ₊₁, in der M¹ ein Alkalimetall- oder Ammoniumion und n eine Zahl von 3 bis 100 bedeuten, vornimmt.

8. Polymerisat nach Anspruch 7, enthaltend 90 - 100 Gew. % Methacrylsäuremethylester und 0 - 10 Gew. % mindestens einer der Komponenten aus der Gruppe Methylacrylat, Ethylacrylat, Butylacrylat, Methacrylsäureethylester, Methacrylsäurebutylester, Methacrylsäure-2-ethylhexylester, 2-Ethylhexylacrylat, erhalten durch Polymerisation der Monomeren oder des Monomergemisches in wäßriger Suspension und in Gegenwart eines wasserlöslichen hochmolekularen organischen Dispergierhilfsmittel, wobei man zur Erhöhung der Spritzgußzersetzungstemperatur auf mindestens 320 °C, und zur Verbesserung des Yellowness-Index nach ASTM D 1925 um mindestens den Faktor 1,2 die Polymerisation unter Zusatz mindestens einer mehrwertigen Phosphonsäure mit mindestens 2 Phosphonsäureestern im Molekül in Form der freien Säure oder ihres Alkalimetall- oder Ammoniumsalzes oder eines Alkalimetall- oder Ammoniumsalzes eines kondensierten anorganischen Phosphats der Formel M¹ₙ₊₂PₙO₃ₙ₊₁, in der M¹ ein Alkalimetall- oder Ammoniumion und n eine Zahl von 3 bis 100 bedeuten, vornimmt.

9. Kunststoffprodukt, hergestellt aus dem Suspensionspolymerisat nach Anspruch 7.

## Claims

1. A process for the production of suspension polymers by polymerization of esters of acrylic acid or methacrylic acid or of aromatic vinyl compounds or of monomer mixtures consisting predominantly of such monomers in aqueous suspension and in the presence of a water-soluble, high molecular weight organic dispersion aid, characterized in that the polymerization is carried out in the presence of at least one polyfunctional phosphonic acid containing at least two phosphonic acid groups in the molecule in the form of the free acid or an alkali metal or ammonium salt thereof or an alkali metal or ammonium salt of a condensed inorganic phosphate with the formula M¹ₙ₊₂ PₙO₃ₙ₊₁, in which M¹ is an alkali metal or ammonium ion and n is a number of 3 to 100.

2. A process as claimed in claim 1, characterized in that the additive is used in a quantity of 2 to 5,000 ppm, based on the water present in the polymerization system.

3. A process as claimed in claim 2, characterized in that the additive is used in a quantity of 5 to 500 ppm, based on the water present in the polymerization system.

4. A process as claimed in claim 3, characterized in that the additive is used in a quantity of 10 to 100 ppm, based on the water present in the polymerization system.

5. A process as claimed in any of the preceding claims, characterized in that the phosphonic acid contains 2 to 10 phosphonic acid groups in the molecule.

6. A process as claimed in claim 5, characterized in that the phosphonic acid contains 2 to 5 phosphonic acid groups in the molecule.

7. A methyl methacrylate suspension polymer containing 80 to 100% by weight of methyl methacrylate and 0 to 20% by weight of at least one of the components from the group consisting of methyl acrylate, ethyl acrylate, butyl acrylate, ethyl methacrylate, butyl methacrylate, 2-ethylhexyl methacrylate, 2-ethylhexyl acrylate, obtained by polymerization of the monomers or the monomer mixture in aqueous suspension and in the presence of a water-soluble high molecular weight organic dispersion aid, the polymerization being carried out in the presence of at least one polyfunctional phosphonic acid containing at least two phosphonic acid groups in the molecule in the form of the free acid or an alkali metal or ammonium salt thereof or an alkali metal or ammonium salt of a condensed inorganic phosphate with the formula M¹ₙ₊₂ PₙO₃ₙ₊₁, in which M¹ is an alkali metal or ammonium ion and n is a number of 3 to 100, in order to increase the injection moulding decomposition temperature to at least 300°C and to improve the yellowness index according to ASTM D 1925 by a factor of at least 1.1.

8. A polymer as claimed in claim 7 containing 90 to 100% by weight of methyl methacrylate and 0 to 10% by weight of at least one of the components from the group consisting of methyl acrylate, ethyl acrylate, butyl acrylate, ethyl methacrylate, butyl methacrylate, 2-ethylhexyl methacrylate, 2-ethylhexyl acrylate, obtained by polymerization of the monomers or the monomer mixture in aqueous suspension and in the presence of a water-soluble high molecular weight organic dispersion aid, the polymerization being carried out in the presence of at least one polyfunctional phosphonic acid containing at least two phosphonic acid groups in the molecule in the form of the free acid or an alkali metal or ammonium salt thereof or an alkali metal or ammonium salt of a condensed inorganic phosphate with the formula M¹ₙ₊₂ PₙO₃ₙ₊₁, in which M¹ is an alkali metal or ammonium ion and n is a number of 3 to 100, in order to increase the injection moulding decomposition temperature to at least 320°C and to improve the yellowness index according to ASTM D 1925 by a factor of at least 1.2.

9. A plastic product produced from the suspension polymer claimed in claim 7.

## Revendications

1. Procédé de préparation de produits de polymérisation en suspension par polymérisation d'ester de l'acide acrylique ou de l'acide méthacrylique ou d'aromatiques vinyliques ou de mélanges de monomères, qui se composent principalement de sels monomères, en suspension aqueuse et en présence d'un adjuvant de dispersion organique à poids moléculaire élevé, soluble dans l'eau, caractérisé en ce qu'on entreprend la polymérisation en ajoutant au moins un acide phosphonique plurivalent avec au moins 2 radicaux d'acide phosphonique dans la molécule sous la forme de l'acide libre ou de son sel de métal alcalin ou d'ammonium d'un phosphate minéral condensé de formule M¹ₙ₊₂ Pₙ O₃ₙ₊₁, dans laquelle M¹ représente un ion de métal alcalin ou d'ammonium et n un nombre de 3 à 10.

2. Procédé selon la revendication 1, caractérisé en ce qu'on utilise l'adjuvant en une quantité de 2 à 5000 ppm, rapportée à l'au existant dans le système de polymérisation.

3. Procédé selon la revendication 2, caractérisé en ce qu'on utilise l'adjuvant en une quantité de 5 à 500 ppm, rapportée à l'eau présente dans le système de polymérisation.

4. Procédé selon la revendication 3, caractérisé en ce qu'on utilise l'adjuvant en une quantité de 10 à 100 ppm, rapportée à l'eau présente dans le système de polymérisation.

5. Procédé selon l'une des revendications précédentes, caractérisé en ce que l'acide phosphonique se présente dans la molécule avec de 2 à 10 radicaux d'acide phosphonique.

6. Procédé selon la revendication 5, caractérisé en ce que l'acide phosphonique se présente dans la molécule avec de 2 à 5 radicaux d'acide phosphonique.

7. Polymérisat en suspension d'ester méthylique d'acide acrylique contenant 80-100 % en poids d'ester méthylique d'acide méthacrylique et 0-20 % en poids au moins d'un des composants du groupe acrylate de méthyle, acrylate d'éthyle, acrylate de butyle, ester éthylique d'acide méthacrylique, ester butylique d'acide méthacrylique, ester 2 éthylhéxilique de l'acide méthacrylique, l'acrylate 2-éthylhéxylique, obtenus par polymérisation des monomères ou du mélange de monomères en suspension aqueuse et en présence d'un adjuvant de dispersion organique à poids moléculaire élevé, soluble dans l'eau, avec lequel on entreprend, pour augmenter la température de décomposition du moulage par injection à au moins 300°C, et pour améliorer l'indice de tonalité jaune selon ASTM D 1985 d'au minimum le facteur 1,1, la polymérisation en ajoutant au moins un acide phosphonique plurivalent ayant au moins 2 radicaux d'acide phosphonique dans la molécule sous la forme de l'acide libre ou de son sel de métal alcalin ou d'ammonium ou d'un sel de métal alcalin ou d'ammonium d'un phosphate minéral condensé de formule M¹ₙ₊₂ PₙO₃ₙ₊₁, dans laquelle M¹ représente un ion de métal alcalin ou d'ammonium et n un nombre de 3 à 100.

8. Polymérisat selon la revendication 7, contenant 90-100 % en poids d'ester méthylique d'acide méthacrylique et 0-10 % en poids au moins d'un des composants du groupe de l'acrylate méthylique, de l'acrylate éthylique, de l'acrylate butylique, de l'ester éthylique d'acide méthacrylique, de l'ester butylique d'acide méthacrylique, de l'ester 2-éthylhéxylique de l'acide méthacrylique, de l'acrylate 2-éthylhéxylique, obtenus par polymérisation des monomères ou du mélange des monomères en suspension aqueuse et en présence d'un dispersant organique à poids moléculaire élevé soluble dans l'eau, avec lequel on entreprend pour augmenter la température de décomposition du moulage par injection au moins à 320°C et pour améliorer l'indice de tonalité jaune selon ASTM D 1985 d'au moins le facteur 1,2, la polymérisation en ajoutant au moins un acide phosphonique plurivalent ayant au moins 2 esters d'acide phosphonique dans la molécule sous la forme de l'acide libre ou de son sel de métal alcalin ou d'ammonium d'un phosphate minéral condensé de formule M¹ₙ₊₂ PₙO₃ₙ₊₁, dans laquelle M¹ représente un ion de métal alcalin ou d'ammonium et n un nombre de 3 à 100.

9. Produit de matière plastique préparé à partir du polymérisat en suspension selon la revendication 7.
